## Europäisches Patentamt
## European Patent Office
## Office européen des brevets

(19)

(11) Veröffentlichungsnummer: **0 054 752**
**B1**

(12) **EUROPÄISCHE PATENTSCHRIFT**

(45) Veröffentlichungstag der Patentschrift:
14.08.85

(51) Int. Cl.⁴: **B 65 G 23/06, F 16 H 55/30**

(21) Anmeldenummer: 81109847.4

(22) Anmeldetag: 24.11.81

(54) **Zahnrad für ein aus plattenförmigen Gliedern bestehendes Gliederförderband.**

(30) Priorität: 23.12.80 DE 3048759

(43) Veröffentlichungstag der Anmeldung:
30.06.82 Patentblatt 82/26

(45) Bekanntmachung des Hinweises auf die Patenterteilung:
14.08.85 Patentblatt 85/33

(84) Benannte Vertragsstaaten:
AT BE CH FR GB IT LI NL SE

(56) Entgegenhaltungen:
DE - A - 2 152 106
DE - A - 2 838 245
DE - B - 2 045 028
DE - U - 1 896 801
GB - A - 1 413 072
US - A - 2 059 063

(73) Patentinhaber: Draadindustrie Jonge Poerink B.V., Prins Bernhardlaan 25, Borne (NL)

(72) Erfinder: Poerink, Nikolaas Jonge, Prins Bernardlaan 25, Borne (NL)

(74) Vertreter: Schulze Horn, Stefan, Dipl.-Ing. et al, Patentanwälte Dipl.-Ing. S. Schulze Horn M.SC. Dr. H. Hoffmeister Goldstrasse 36, D-4400 Münster (DE)

**Beschreibung**

Die Erfindung betrifft ein Zahnrad für ein Gliederförderband aus plattenförmigen Gliedern, dessen Nabe zum Aufstecken auf eine An- oder Abtriebswelle ausgebildet ist.

Bei derartigen Plattenförderbändern sind die Einzelelemente nach dem Baukastensystem zusammengesetzte, zumeist modulartig aufeinander abgestimmte Teile, die üblicherweise ohne grossen Montageaufwand rasch zusammensteckbar, gegebenenfalls aus gleichartigen Grundbausteinen in verschiedenen Abmessungs-Rastern erstellbar sein müssen.

Da es sich zumeist um endlose Gliederförderbänder handelt, die über Tragrollen und Tragrollenstationen vorzugsweise gleichen Abstandes laufen, sowie mit mindestens einer Umlenk- und Spannstation und mindestens einer Antriebsstation ausgestattet sind, ergibt sich die Notwendigkeit, auch die Einzelelemente dieser insgesamt als Betriebsstationen bezeichneten Anlageteile eines funktionsfähigen Gliederförderbandes in das erwähnte Baukastensystem mit einzubeziehen.

Auch auf diese Elemente trifft daher in gleicher Weise die Forderung nach einer für Serienfertigung geeigneten Ausgestaltung, Eignung für rasche und unkomplizierte Montagemöglichkeit, insbesondere auch deshalb zu, weil bei Reparaturen oder routinemässigem Austausch von Verschleissteilen oder aus ähnlichem Anlass die notwendigen Arbeiten – man denke an einen Flughafenbetrieb – in aller Kürze erledigbar sein müssen.

Diese Forderung trifft auch auf das der Erfindung zugrundeliegende Zahnrad für ein Gliederförderband zu, um so mehr, als es sich bei einem solchen in aller Regel um Teile aus Kunststoff handelt, bei denen demnach sowohl das Plattenband bzw. dessen Glieder als auch das Zahnrad selbst aus Kunststoffen von unterschiedlicher Härte hergestellt sind.

Bei bekannten Ausführungen solcher Gliederförderbänder war es bisher allgemein üblich, die Zahnräder insbesondere an der Antriebsstation mit der Welle durch Keile oder Passfedern lösbar zu verbinden, um eine unter allen Umständen, beispielsweise auch bei ruckartigen Betriebszuständen, sichere Übertragung der auftretenden Drehmomente und besonders der Drehmomentspitzen zu erreichen. Gelegentlich wurden auch Keilwellen nach DIN 5463 verwendet.

Bei diesen und ähnlichen Verbindungen mit Formschluss wird jedoch als Nachteil empfunden, dass durch Kerbwirkung örtliche Spannungsspitzen auftraten, die in einigen Fällen zum frühzeitigen Ermüden der Nabe und damit zur Zerstörung führten. Darüber hinaus benötigt eine derartige Verbindung ein hohes Mass an mechanischer Präzision, und erfordert schliesslich auch noch einen relativ grossen Aufwand an sehr sorgfältiger und sachkundiger Montagearbeit.

Aus der GB-A 1 413 072 ist es weiterhin bekannt, Gliederförderbänder mittels Kunststoff-Zahnrädern anzutreiben, wobei die Naben der Räder zum Aufstecken auf eine mit einer entsprechenden Form versehene Antriebswelle quadratisch ausgebildet sind und wobei eines der Räder durch Federringe in seiner Position gehalten wird. Nachteilig ist bei diesen bekannten Zahnrädern nicht nur, dass sie aufwendig durch besondere Mittel zu positionieren sind, sondern insbesondere auch, dass sie grössere Antriebsmomente sowie stossweise Belastungen nicht oder nur unbefriedigend aufzunehmen vermögen. Insbesondere erscheint ein gleichmässiger Kraftfluss nicht möglich.

Alle diese Nachteile und Schwierigkeiten führten letzten Endes zu der Forderung nach einer gegenüber den konventionellen Verbindungsarten verbesserten und womöglich vereinfachten, den besonderen Gegebenheiten besser entsprechenden Lösung des Problems der Verbindung von Nabe und Welle bei einem Zahnrad, insbesondere einem solchen aus Kunststoff, für ein Gliederförderband.

Die Aufgabe der Erfindung besteht darin, das Zahnrad durch seine besondere Ausgestaltung im Verhältnis zu seiner speziellen Funktion so auszubilden, dass es ohne Mühe und insbesondere ohne das Erfordernis geschulter Fachleute problemlos montiert oder ausgewechselt werden kann. Dabei soll dies ohne arbeitsintensive Fertigungsverfahren erreicht werden können, die Verbindung soll dabei auch dem rauhesten Betrieb insbesondere bei stossartigen Lastspitzen im Dauerbetrieb widerstehen, ohne dass sich Ermüdungserscheinungen in der Nabe ergeben, es sollen mehrere solcher Zahnräder ebenfalls problemlos auf einer gemeinsamen Welle zu einer Antriebsrolle mit mehreren Zahnkränzen vereinigbar sein, die einen gleichmässigen Eingriff aller Zahnkränze in die Glieder des Gliederförderbandes ermöglicht und es sollen Lager- und Ersatzteilbevorratung durch ein Baukastensystem möglichst niedrig gehalten werden.

Die Lösung der gestellten Aufgabe gelingt bei einem Zahnrad für ein aus plattenförmigen Gliedern bestehendes Gliederförderband, insbesondere aus Kunststoff, dessen Nabe zum Aufstekken auf eine An- oder Abtriebswelle eine Bohrung besitzt, deren Querschnittsform in einer Ebene senkrecht zur Nabenachse die Form eines Polygons, das ein Sechseck sein kann, besitzt und wobei der Querschnittsform der Nabenbohrung eine geometrisch ähnliche Querschnittsform des äusseren Nabenkörpers entspricht, vergrössert um das Mass der Materialdicke des Nabenkörpers; dadurch, dass die Abmessungen der Nabenbohrung bei geometrisch ähnlicher Querschnittsform wesentlich grösser sind als die entsprechenden Abmessungen der Welle, und dass zwischen Nabe und Welle mindestens ein die Abmessungsdifferenzen ausfüllendes, auf die Nabe aufsteckbares Zwischenfutter vorgesehen ist.

Die Verwendung mindestens eines erfindungsgemässen Zwischenfutters zwischen Welle und Nabe entspricht in vorteilhafter Weise den Erfordernissen des Baukastensystems und führt zu erheblichen Einsparungen bei Fertigung und Lager- und Ersatzteilbevorratung und damit zu grösserer Flexibilität bei gesenkten Kosten, da eine Welle durch Verwendung unterschiedlich dimensionierter Futter mit Naben unterschiedlicher Durchmesser in einfacher Weise drehmomentschlüssig verbindbar ist.

Dabei sieht eine weitere Ausgestaltung des Zahnrades für ein Gliederförderband vor, dessen Glieder mit quer zur Bewegungsrichtung versetzt ineinandergreifenden Muffen und durch deren Zentralbohrungen hindurchgesteckten Achsen untereinander mit scharnierartigen Gelenken verbunden, eine vorzugsweise endlose Kette bilden, wobei die Muffen an den Unterseiten der Glieder vorstehend mit diesen Vertiefungen bilden, in die das Zahnrad nach Art eines Kettenrades mit seinen Zähnen angreift, dass der Flankenabstand zweier Zähne gleich oder wenigstens annähernd gleich der Breite eines Gliedes von Gelenk zu Gelenk ist, und dass jeder Zahn ein dem Profil der Vertiefung angepasstes Profil aufweist, vorzugsweise in Form eines Rechtecks.

Damit ergibt sich der Vorteil eines optimalen Formschlusses zwischen Zahnrad und Gliederförderband, was zur Laufruhe, Energie- und Verschleissschonung sowie zum problemlosen langlebigen Betrieb der Förderbandanlage beiträgt.

Um eine Mehrzahl solcher Zahnräder auf einer gemeinsamen Welle ohne Schwierigkeiten zu einer An- oder Abtriebsrolle vereinigen zu können, die insbesondere sich und das Band selbst in der besten Eingriffsposition zentrieren, wird bei einem Zahnrad für ein Gliederförderband mit Gliedern, deren am vorderen und hinteren Ende versetzt angeordnete Gelenk-Muffen durch rippenartige, vorzugsweise schräg zur Bewegungsrichtung gestellte Stege verbunden eine Vielzahl nebeneinanderliegender Moduln mit der Abmessung «M» ergeben, vorgeschlagen, dass der Abstand Nabenstirnseite – Mitte Zahnkranz 1/2 «M» oder 1 «M», und die Länge «L» der Nabe 3/2 «M», oder gegebenenfalls ein vielfaches Ganzes davon betragen.

Weiterhin wird in einer weiteren Ausgestaltung vorgeschlagen, dass die Welle bei einer mit der Nabenbohrung übereinstimmenden Querschnittsform im Verhältnis zur Bohrung so toleriert ist, dass sich zwischen Welle und Nabe eine verhältnismässig lose Passung, vorzugsweise nach Art eines Schiebesitzes ergibt.

Dies hat insbesondere bei einem aus Kunststoff gefertigten Zahnrad den Vorteil, dass das «Einlaufen» der Welle/Nabe bei geringfügigen Form- oder Massabweichungen begünstigt wird, was der Laufqualität der Förderbandanlage zugute kommt.

Und schliesslich wird ebenfalls aus Gründen der Montageerleichterung, aber auch zur Erleichterung des Einlaufvorganges sowie der Selbstzentrierung vorgeschlagen, dass die Toleranzen Nabe/Welle zur Nabenmitte hin enger sind, als im Bereich der Stirnseiten.

Im folgenden wird die Erfindung anhand von Ausführungsbeispielen in der Zeichnung näher erläutert. Die Figuren zeigen:

Figur 1 in Seitenansicht ein Zahnrad nach der Erfindung mit einem Teil eines Gliederförderbandes, mit einem Futter und der Welle im Schnitt.

Figur 2 eine Ansicht des Zahnrades aus einer Blickrichtung senkrecht zur Wellenachse,

Figur 3 eine Mehrfach-Zahnrad-Anordnung auf einer gemeinsamen Welle, aus einer Blickrichtung senkrecht zur Wellenachse, im Eingriff mit einem im Schnitt dargestellten Glied des Gliederförderbandes.

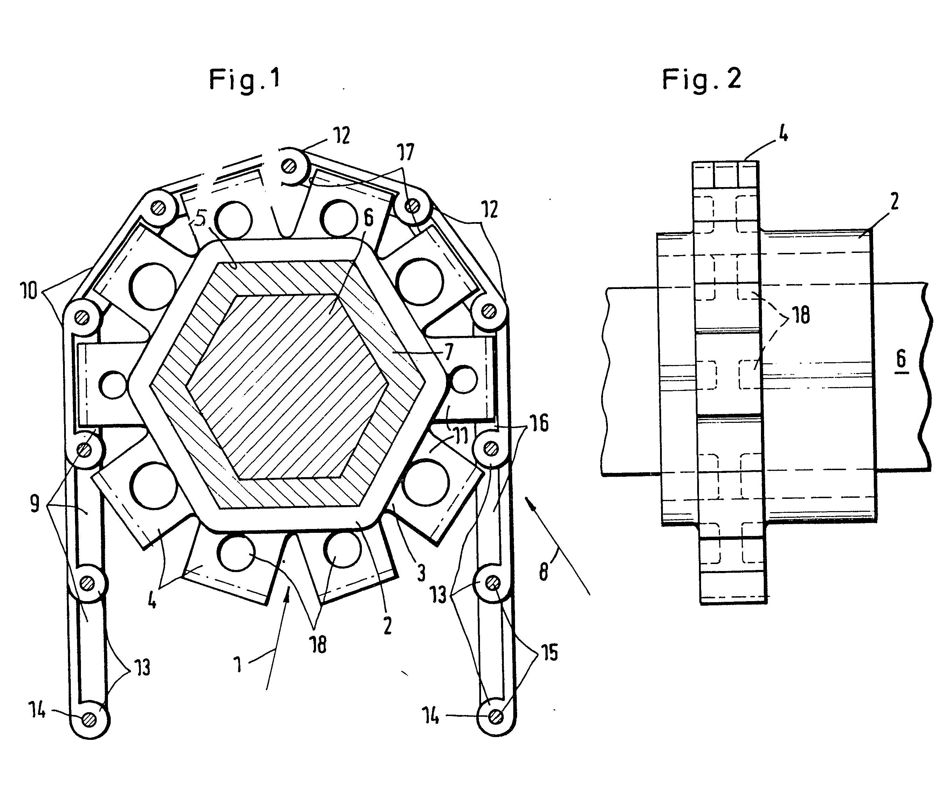

Das Zahnrad 1 in der Figure 1 besteht aus der Nabe 2 und dem Zahnkranz 3 mit den Zähnen 4. Die Nabe 2 besitzt eine Bohrung 5 von sechseckigem Querschnitt. Da diese Bohrung 5 aus Gründen der Standardisierung seiner Abmessungen im Rahmen eines typengenormten Baukastensystems grössere Querschnitte aufweist als die zugehörige Welle 6, ist zwischen der Bohrung 5 der Nabe 2 und der Welle 6 ein Zwischenfutter 7 eingelegt, das beispielsweise mit einem Schiebesitz gegenüber der Bohrung 5 toleriert ist, wogegen es gegenüber der Welle 6 einen weiteren Toleranzspielraum von beispielsweise plus 0,4 mm allseits aufweist. Ohne das Futter würde die Antriebsrolle mit den Zahnrädern 1, 1′, 1″ etc. die grösseren Dickenmasse entsprechend der Bohrung 5 aufweisen, was bei entsprechend langer Welle bei einem sehr breiten Transportband 8 oder bei erhöhten Förderlasten zweckmässig sein könnte. Das Zahnrad 1 hat 10 Zähne 4 auf dem Umfang, die in Vertiefungen 9 an der Unterseite eines jeden Gliedes 10 des Gliederförderbandes 8 eingreifend der Form dieser Vertiefungen 9 angepasst sind und aus diesem Grunde ein annähernd rechteckiges Zahnprofil 11 aufweisen.

Die Vertiefungen 9 ergeben sich in Zwischenräumen zwischen den die Gelenke 12 der Glieder 10 bildenden Muffen 13, die mit Zentralbohrungen 14 ausgestattet sind, die je Muffe/Lücke/Muffe/Lücke ineinandergreifend durch Gelenkachsen 15 in den Zentralbohrungen zu scharnierartigen Gelenken 12 zusammengefügt sind, die auf diese Weise eine Kette bilden. Zwischen den Muffen 13 angeordnete, die Muffen verbindende Stege begrenzen die Vertiefungen 9 in axialer Richtung seitlich und bilden, je zwei Muffen mit je zwei begrenzenden Stegen 16 ein die Vertiefung 9 umgrenzendes Modul. Dabei entspricht die Entfernung Zahnflanke 17/Zahnflanke 17′ wenigstens annähernd einer Entfernung Gelenk 12/Gelenk 12′. Aus der Darstellung ist deutlich zu erkennen, dass durch die polygone Gestaltung im sechseckigen Querschnitt von Nabenbohrung 5 und Welle 6 mit dem entsprechend geformten Zwischenfutter 7 ein Formschluss zur Drehmomentenübertragung erreicht wird, der optimale Drehmomenten-Übertragungsverhältnisse auch unter ungünstigen Umständen wie bei ruckweisen Betriebszuständen etc. ermöglicht, ohne dass es hierzu weiterer Hilfsmittel wie etwa Keile, Passfedern oder ähnliche bedarf. Infolge der grosszügig weit tolerierten Passungen entfällt jede feinmechanische Passarbeit, und die Montage beschränkt sich darauf, dass das Zahnrad mit einer bestimmten Anzahl weiterer Zahnräder auf die Welle 6 gesteckt und zwischen den äusseren Lagern je rechts und links in axialer Richtung eine Fixierung erhält.

Figur 2 zeigt das gleiche Zahnrad 1 von einer um 90° geschwenkten Betrachtungsebene gegenüber der Figur 1. Man erkennt die Welle 6, darauf die Nabe 2 mit dem Zahnkranz 3 sowie die Materialentlastungsbohrungen 18 im Material der einzelnen Zähne 4.

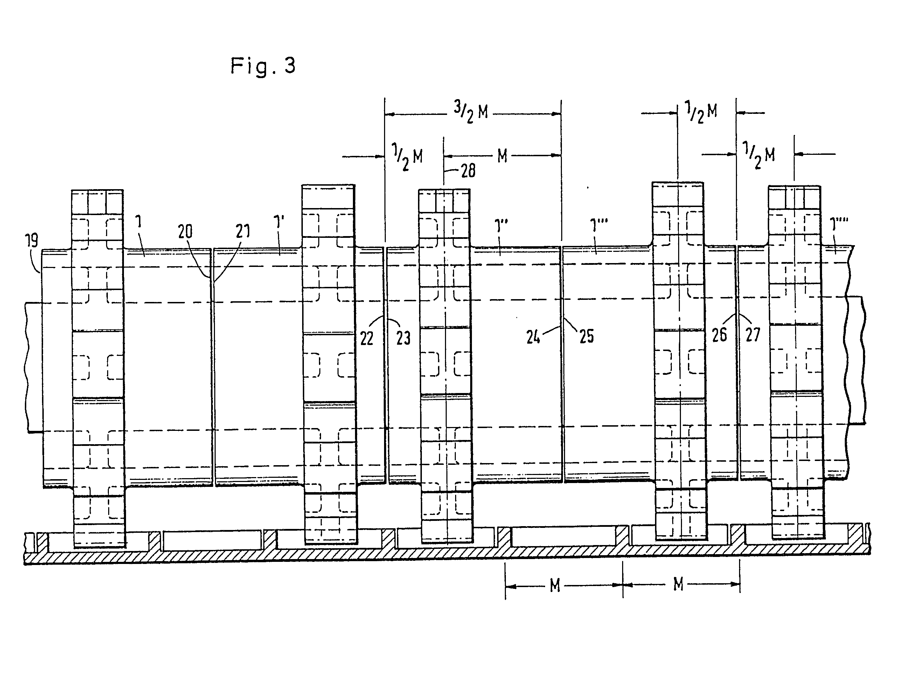

Die Darstellung in der Figur 3 zeigt auf der Welle 6 vier mit ihren Stirnseiten 19 bis 27 sich berührende Naben 2, 2', 2'', 2''' der Zahnräder 1, 1', 1''', 1''''. Darunter ist, rein schematisch angedeutet, ein Glied 10 eines Gliederförderbandes im Schnitt dargestellt. Man erkennt die Moduln bildenden Vertiefungen 9 von der Breite «M» eines Moduls. Daraus ergeben sich die darauf abgestimmten modulierten Abmessungen Stirnseite 23/Zahnkranzmitte 28 = 1/2 M; Zahnkranzmitte 28/Stirnseite 24 = 1 M; Stirnseite 23/Stirnseite 24 = 3/2 M usw.

Die Gesamtbreite eines Gliederförderbandes ist demnach ein beliebig Vielfaches der Rastermasse einer Nebenbreite 3/2 M.

Liste der Bezugszeichen

| | |
|---|---|
| Zahnrad | 1 |
| Nabe | 2 |
| Zahnkranz | 3 |
| Zahn | 4 |
| Nabenbohrung | 5 |
| Welle | 6 |
| Zwischenfutter | 7 |
| Gliederförderband | 8 |
| Vertiefung | 9 |
| Glied | 10 |
| Zahnprofil | 11 |
| Gelenk | 12 |
| Muffe | 13 |
| Zentralbohrung | 14 |
| Gelenkachse | 15 |
| Steg | 16 |
| Zahnflanke | 17 |
| Materialentlastungsbohrung | 18 |
| Stirnseiten | 19 bis 27 |
| Zahnkranzmitte | 28 |

**Patentansprüche**

1. Zahnrad (1) aus Kunststoff für ein aus plattenförmigen Gliedern bestehendes Gliederförderband, dessen Nabe (2) zum Aufstecken auf eine An- oder Abtriebswelle (6) ausgebildet ist, wobei die die Welle (6) mit Drehmomentschluss aufnehmende Nabe (2) eine Bohrung (5) besitzt, deren Querschnittsform in einer Ebene senkrecht zur Nebenachse die Form eines Polygons, das ein Sechseck sein kann, besitzt, und wobei der Querschnittsform der Nabenbohrung (5) eine geometrisch ähnliche Querschnittsform des äusseren Nabenkörpers (2) entspricht, vergrössert um das Mass der Materialdicke des Nabenkörpers (2), dadurch gekennzeichnet, dass die Abmessungen der Nabenbohrung (5) bei geometrisch ähnlicher Querschnittsform wesentlich grösser sind als die entsprechenden Abmessungen der Welle (6), und dass zwischen Nabe (2) und Welle (6) mindesens ein die Abmessungsdifferenzen ausfüllendes, auf die Nabe (2) aufsteckbares Zwischenfutter (7) vorgesehen ist.

2. Zahnrad nach Anspruch 1, dadurch gekennzeichnet, dass die Welle (6) bei einer mit der Nabenbohrung (5) übereinstimmenden Querschnittsform im Verhältnis zur Bohrung (5) so toleriert ist, dass sich zwischen Welle (6) und Nabe (2) eine verhältnismässig lose Passung, vorzugsweise nach Art eines Schiebesitzes ergibt.

3. Zahnrad nach Anspruch 2, dadurch gekennzeichnet, dass die Toleranzen Nabe (2)/Welle (6) zur Nabenmitte hin enger sind als im Bereich der Stirnseiten.

4. Zahnrad nach einem der Ansprüche 1 bis 3 für ein Gliederförderband mit Gliedern, deren am vorderen und hinteren Ende versetzt angeordnete Gelenk-Muffen durch rippenartige, vorzugsweise schräg zur Transportbewegung gestellte Stege verbunden sind und eine Vielzahl nebeneinanderliegender Moduln mit der Abmessung «M» ergeben, dadurch gekennzeichnet, dass der Abstand Nabenstirnseite (23, 24)/Mitte Zahnkranz (28) 1/2 M oder 1 M, und die Gesamtlänge der Nabe (2) 3/2 M oder gegebenenfalls ein vielfaches Ganzes davon betragen.

**Claims**

1. A sprocket wheel (1) made of plastics material for a link-type conveyer belt consisting of plate-like links, the hub (2) of which is formed so as to be adapted to be slid on a driving or driven shaft (6), wherein the hub (2) receiving the shaft (6) with torque transmitting engagement has a bore (5) the cross-sectional configuration of which has in a plane normal to the hub axis the shape of a polygon which may be a hexagon, and wherein a geometrically similar cross-sectional configuration of the outer hub body (2) corresponds to the cross-sectional configuration of the hub bore (5), enlarged by the dimension of the material thickness of the hub body (2), characterized in that the dimensions of the hub bore (5), with a geometrically similar cross-sectional configuration, are substantially larger than the respective dimensions of the shaft (6); and that between the hub (2) and the shaft (6) there is provided at least one intermediate liner (7) filling up the differences in dimension and adapted to be slid on the hub (2).

2. The sprocket wheel according to claim 1, characterized in that the shaft (6), having a cross-sectional configuration complementary to that of the hub bore (5), has tolerances relative to the bore (5) such that a relatively loose fit, preferably corresponding to a sliding fit, results between the shaft (6) and the hub (2).

3. The sprocket wheel according to claim 2, characterized in that the tolerances between hub (2) and shaft (6) are closer toward the hub center than in the region of the end faces.

4. The sprocket wheel according to any one of claims 1 to 3, for a link-type conveyor belt comprising links the hinge sleeves of which, located in staggered relation at the front and rear ends, are interconnected by rib-like webs, preferably positioned with an inclination relative to the direction of conveyance, and define a plurality of side-by-side disposed modules having the dimension «M», characterized in that the distance between the hub end face (23, 24) and the center of the sprocket wheel rim (28) is equal to ½ M or 1 M, and the total length of the hub (2) is equal to ½ M or, optionally, an integer multiple thereof.

**Revendications**

1. Roue dentée (1) en matière plastique pour une bande transporteuse à maillons constituée de maillons en forme de plaque, le moyeu (2) de cette roue dentée étant aménagé pour être enfilé sur un arbre (6) entraînant ou entraîné, ce moyeu (2) recevant l'arbre (6) en établissant avec celui-ci une liaison transmettrice de couple, ce moyeu possèdant un alésage (5) dont la forme en coupe transversale dans un plan perpendiculaire à son axe est polygonale, éventuellement hexagonale, et le corps extérieur du moyeu (2) ayant en coupe transversale une forme géométriquement semblable à celle de son alésage (5) augmentée de la dimension de l'épaisseur de matière de ce corps (2) du moyeu, caractérisée en ce que les dimensions de l'alésage (5) du moyeu, pour une forme en coupe transversable géométriquement semblable, sont sensiblement plus grandes que les dimensions correspondantes de l'arbre (6), et en ce qu'il est prévu, entre moyeu (2) et arbre (6), au moins un mandrin intermédiaire (7) comblant les différences de dimensions et pouvant être associé au moyeu (2) par emboîtement.

2. Roue dentée selon la revendication 1, caractérisée en ce que l'arbre (6), dont la forme en coupe transversale correspond à l'alésage du moyeu, est tolérancé, par rapport à cet alésage (5), de façon qu'il y ait entre l'arbre (6) et le moyeu (2) un ajustement relativement lâche, de préférence du genre ajustement coulissant.

3. Roue dentée selon la revendication 2, caractérisée en ce que les tolérances entre moyeu (2) et arbre (6) sont plus étroites vers le milieu du moyeu que dans la région des faces frontales.

4. Roue dentée selon l'une des revendications 1 à 3, pour une bande transporteuse à maillons dont les manchons d'articulation agencés de manière décalée aux extrémités avant et arrière sont reliés par des âmes du genre nervure disposées de préférence obliquement par rapport au mouvement de transport et créent une pluralité de modules consécutifs ayant la dimension «M», caractérisée en ce que l'intervalle entre face frontale (23, 24) de moyeu et milieu (28) de couronne dentée vaut ½ M ou 1 M, et la longueur totale du moyeu (2) vaut ½ M ou un numbre entier de fois ½ M.

0 054 752

Fig. 2

Fig. 1

7

Fig. 3